# EUROPÄISCHE PATENTSCHRIFT

(11) **EP 2 672 159 B1**
(45) Veröffentlichungstag und Bekanntmachung des Hinweises auf die Patenterteilung: **11.05.2016**
(21) Anmeldenummer: 13170385.2
(22) Anmeldetag: 04.06.2013
(51) Int. Cl.: F16L 33/207, F16L 33/22

(54) **Vorrichtung zum Anschluss eines Rohres an einem Anschlussnippel**
Device for attaching a tube to a connection nipple
Dispositif de raccordement d'un tuyau sur un raccord fileté

(30) Priorität: 06.06.2012 AT 502242012
(43) Veröffentlichungstag der Anmeldung: 11.12.2013
(73) Patentinhaber: KE KELIT Kunststoffwerk Gesellschaft m.b.H., 4020 Linz (AT)
(72) Erfinder: Ratschmann, Elmar, 4201 Hellmonsödt (AT); Linzner, Werner, 4616 Weißkirchen (AT)
(74) Vertreter: Patentanwaltskanzlei Hübscher

(56) Entgegenhaltungen:
- EP-A1- 2 154 411
- EP-A2- 2 246 606
- WO-A1-2011/097658

## Beschreibung

Die Erfindung betrifft eine Vorrichtung zum Anschluss eines Rohres an einem Anschlussnippel, wobei das mit einer stirnseitigen Anfasung wenigstens im Bereich des Innendurchmessers versehene Anschlussende des Rohrs unter Zwischenlage wenigstens eines vorzugsweise im profilierten Anschlussnippel gehaltenen Dichtungsringes zwischen dem Anschlussnippel und einer Hülse axial festgehalten ist, wobei der Anschlussnippel wenigstens eine radial auswärts vorstehende, mittels der stirnseitigen Anfasung im Bereich des Innendurchmessers des Anschlussendes radial nach innen verlagerbare Anlauffläche aufweist, die in Einsteckrichtung gesehen vor dem Dichtungsring angeordnet ist

Um mit einem Druckmedium beaufschlagte Rohre, beispielsweise Rohr für Wasserleitungen im Bereich von Hausinstallationen, abzugsicher an einem Anschlussnippel einer Armatur zu befestigen, ist es bekannt, das auf den mit einer Profilierung versehenen Anschlussnippel aufgeschobene Rohr zwischen dem Anschlussnippel und einer das Rohr umschließenden Klemmhülse festzuklemmen. Die Abdichtung zwischen dem Anschlussnippel und dem Rohr wird dabei durch wenigstens einen in eine umlaufende Ausnehmung des Anschlussnippels eingesetzten Dichtungsring sichergestellt, über den das Rohr auf den Anschlussnippel aufgeschoben werden muss. Zu diesem Zweck ist das Anschlussende des Rohres im Bereich seines Innendurchmessers stirnseitig mit einer Anfasung versehen, die den Dichtungsring beim Aufschieben des Rohres auf den Anschlussnippel unter einer elastischen Verformung in die Ausnehmung eindrückt. Fehlt eine solche Anfasung oder ist sie unzureichend, so besteht die Gefahr, dass der an die Stirnfläche des Rohres anschlagende Dichtungsring beim Aufschieben des Rohres auf den Anschlussnippel aus der Ausnehmung gezwängt und entlang des Anschlussnippels verschoben wird, was wiederum die notwendige Abdichtung zwischen Anschlussnippel und Rohr gefährdet, ohne dass diese Gefährdung erkannt wird, weil ja die Klemmhülse, zwischen der und dem Anschlussnippel das Rohr eingeführt wird, den Dichtungsring abdeckt.

Um eine Beschädigung eines Dichtungsringes beim Aufschieben eines Rohres auf einem Anschlussnippel zu vermeiden, ist es bekannt (WO 2007/097658 A1), den Anschlussnippel mit wenigstens einem radial auswärts und gegen die Aufschubrichtung vorstehenden, mittels der stirnseitigen Anfasung im Bereich des Innendurchmessers des Anschlussendes radial nach innen verlagerbaren Anschlag auszustatten, wobei der Anschlag in Einsteckrichtung gesehen vor dem Dichtungsring angeordnet ist. Um einen fehlerhaften Anschluss von einem Kunststoffrohr an einem Anschlussnippel zu vermeiden, ist es darüber hinaus bekannt (EP 2 246 606 A2), die Klemmhülse 4 mit wenigstens einem radial einwärts vorstehenden, mittels der stirnseitigen Anfasung im Bereich des Außendurchmessers des Anschlussendes radial nach außen verlagerbaren Anschlag zu versehen, wobei der Anschlag in Einsteckrichtung gesehen ebenfalls vor dem Dichtungsring angeordnet ist.

Der Erfindung liegt somit die Aufgabe zugrunde, eine alternative Vorrichtung zum Anschluss eines Rohres an einem Anschlussnippel der eingangs geschilderten Art so auszugestalten, dass eine unzulässige Verlagerung des Dichtungsringes bzw. eine Beschädigung des Dichtungsringes beim Anschließen des Rohres am Anschlussnippel unterbunden wird.

Die Erfindung löst die gestellte Aufgabe dadurch, dass die Anlauffläche mit der Anschlussnippelachse einen spitzen Winkel einschließt und Teil eines in eine Nut eingesetzten Ringkörpers ist, der in seiner radial auswärtsragenden Ausgangsstellung einen Abstand zur Anschlussnippelachse aufweist der größer ist als der Innenradius des Rohres, und der sowohl in radialer wie auch in axialer Richtung elastisch verformbar ist.

Wird zufolge dieser Maßnahme versucht, ein nicht oder nur unzureichend angefastes Anschlussende eines Rohres auf den Anschlussnippel aufzuschieben, so bildet die Anlauffläche aufgrund ihrer entsprechend gewählten Abmessungen mit der dem Anschlussende des Rohres zugekehrten Stirnfläche eine Anschlagfläche, die das Aufschieben des Rohres auf den Anschlussnippel hemmt. Dies insbesondere deshalb, da sich der Ringkörper beim Aufschieben eines nicht ordnungsgemäß angefasten Rohres in axialer Richtung elastisch verformt, also staucht, was ein Ausbauchen des Ringkörpers unmittelbar ab der Anlauffläche zu Folge hat und somit ein weiteres aufschieben des unangefasten Rohres verhindert. Bei einem ordnungsgemäß angefasten Rohr stellt jedoch die Anfasung eine Gegenfläche zur Anlauffläche dar, die beim Aufschieben des Rohres auf den Anschlussnippel radial auf den Innendurchmesser des Rohres zusammengedrückt wird und den Weg für das Aufschieben des Rohres in die Anschlussstellung freigibt. Gegebenenfalls sind mehrere Anlaufflächen über den Anschlussnippelumfang verteilt vorgesehen.

Anspruch 2 betrifft die eine weitere Variante der Erfindung, nach der der erfindungsgemäße Ringkörper der Hülse und nicht dem Anschlussnippel zugeordnet ist. Die Funktionsweise dieser kinematischen Umkehr ist aber die gleiche. Er betrifft Vorrichtung zum Anschluss eines Rohres an einem Anschlussnippel, wobei das mit einer stirnseitigen Anfasung wenigstens im Bereich des Außendurchmessers versehene Anschlussende des Rohrs unter Zwischenlage wenigstens eines Dichtungsringes zwischen dem Anschlussnippel und einer Hülse axial festgehalten ist, wobei der Anschlussnippel wenigstens eine radial einwärts vorstehende, mittels der stirnseitigen Anfasung im Bereich des Außendurchmessers des Anschlussendes radial nach außen verlagerbare Anlauffläche aufweist, die in Einsteckrichtung gesehen vor dem Dichtungsring angeordnet ist. Und zeichnet sich dadurch aus, dass die Anlauffläche mit der Anschlussnippelachse einen spitzen Winkel einschließt und Teil eines in eine Nut eingesetzten Ringkörpers ist, der in seiner radial einwärtsragenden Ausgangsstellung einen Abstand zur Anschlussnippelachse aufweist der kleiner ist als der Außenradius des Rohres, und der sowohl in radialer wie auch in axialer Richtung elastisch verformbar ist.

Konstruktiv besonders einfache Konstruktionsverhältnisse ergeben sich, wenn der Ringkörpers in Umfangsrichtung gegebenenfalls abschnittsweise, einen polygonen, insbesondere dreieckförmigen oder trapezförmigen, Ringkörperquerschnitt aufspannt. So bildet insbesondere der in Aufschubrichtung des Rohres vordere Polygonzug die Anlauffläche für die Anfasung. Wesentlich ist, dass ein Polygonzug aufgespannt wird, geschlossen muss dieser nicht zwangsläufig sein. Als Einatzmaterialien für den Ringkörper seien hier nur beispielsweise die Anforderung erfüllende, entsprechend elastische Kunststoffe, Gummi u. dgl. erwähnt.

Nach einer robusten Weiterbildung der Erfindung weist der Ringkörper über Filmscharniere verbundene Stege auf, wobei die in Aufsteckrichtung ersteren Stege die Anlauffläche bilden. Zusätzlich können die Stege über weitere Filmscharniere an in die Nut eingesetzten Ringelementen angreifen. Die Filmscharniere können dabei für die geforderte Federelastizität sorgen und die Aufgabe der Feder zusätzlich zu den Stegen übernehmen.

Einfachste Verhältnisse ergeben sich, wenn der Ringkörper aus einem geschlossenen gummielastischen Material besteht dessen in Aufsteckrichtung vordere Kontaktfläche die Anlauffläche bildet. In diesem Fall ist der Ringkörper vereinfacht dargestellt als Ring mit dem die erforderliche Anlauffläche ausbildenden Ringquerschnitt ausgebildet.

In der Zeichnung ist der Erfindungsgegenstand beispielsweise dargestellt. Es zeigen
Fig. 1 eine erfindungsgemäße Vorrichtung zum Anschließen eines Rohres an einem Anschlussnippel mit einem ordnungsgemäß auf den Anschlussnippel aufgeschobenen Rohr in einem vereinfachten Axialschnitt,
Fig. 3 und 4 die Vorrichtung aus Fig. 1 beim Aufschieben eines unangefasten Rohres,
Fig. 5 die Vorrichtung aus Fig. 1 beim Aufschieben eines angefasten Rohres,
Fig. 6 und 7 eine Konstruktionsvariante der Vorrichtung aus Fig. 1 beim Aufschieben eines unangefasten Rohres und

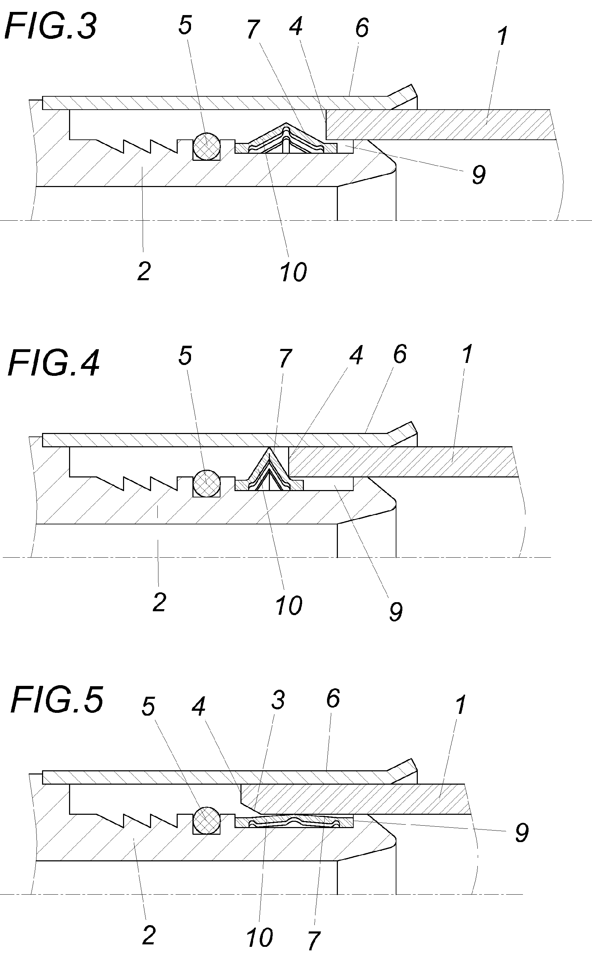

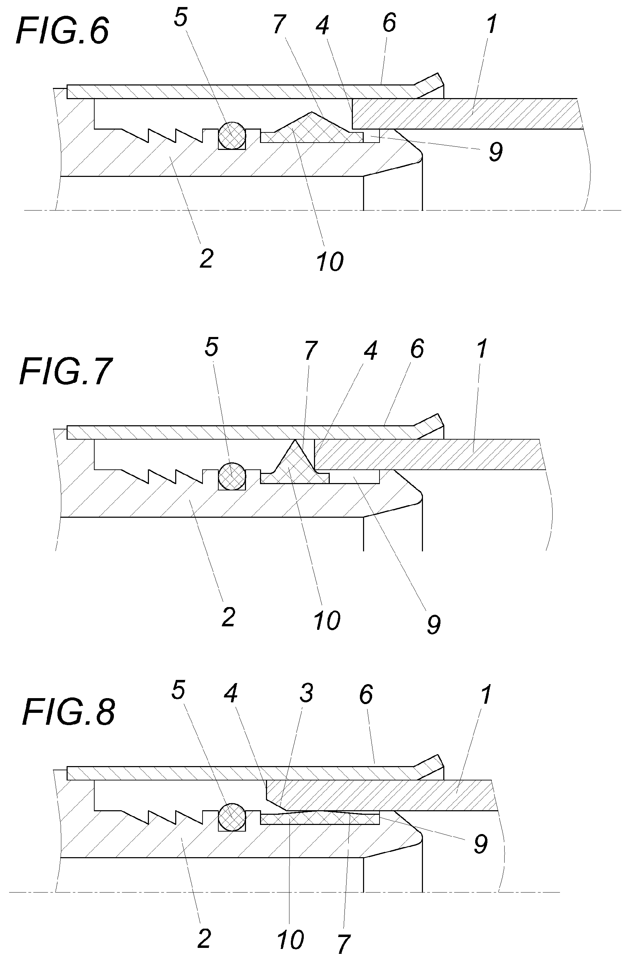

Fig. 5 die Vorrichtung aus Fig. 6 u. 7 beim Aufschieben eines angefasten Rohres.

Die Fig. zeigen eine erfindungsgemäße Vorrichtung zum Anschluss eines Rohres 1 an einem Anschlussnippel 2, wobei das mit einer stirnseitigen Anfasung 3 im Bereich des Innendurchmessers versehene Anschlussende 4 des Rohrs 1 unter Zwischenlage eines im profilierten Anschlussnippel 2 gehaltenen Dichtungsringes 5 zwischen dem Anschlussnippel 2 und einer Hülse 6 axial festgehalten ist und wobei der Anschlussnippel 2 wenigstens eine radial auswärts vorstehende, mittels der stirnseitigen Anfasung 3 im Bereich des Innendurchmessers des Anschlussendes 4 radial nach innen verlagerbare Anlauffläche 7 aufweist, die in Einsteckrichtung gesehen vor dem Dichtungsring 5 angeordnet ist.

Um eine Vorrichtung zum Anschluss eines Rohres an einem Anschlussnippel so auszugestalten, dass eine unzulässige Verlagerung des Dichtungsringes bzw. eine Beschädigung des Dichtungsringes beim Anschließen des Rohres am Anschlussnippel unterbunden wird schließt die Anlauffläche 7 mit der Anschlussnippelachse 8 einen spitzen Winkel α ein und ist die Anlauffläche 7 Teil eines in eine Nut 9 eingesetzten Ringkörpers 10, der in seiner radial auswärtsragenden Ausgangsstellung einen Abstand zur Anschlussnippelachse 8 aufweist der größer ist als der Innenradius des Rohres 1, und der sowohl in radialer wie auch in axialer Richtung elastisch verformbar ist.

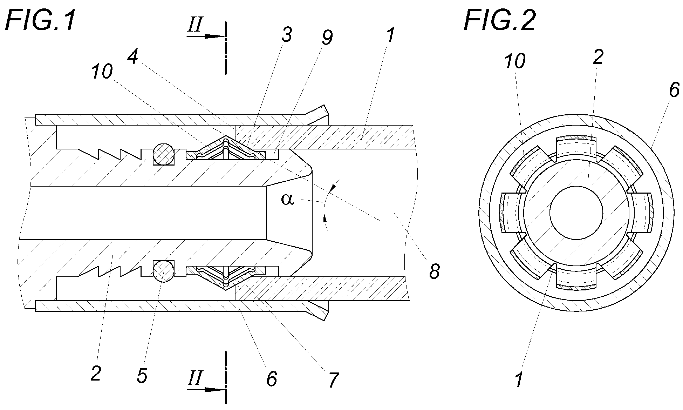

Der Ringkörper 10 spannt in Umfangsrichtung gegebenenfalls abschnittsweise (Fig. 1 bis 5), einen polygonen, insbesondere dreieckförmigen oder trapezförmigen, Ringkörperquerschnitt auf. Zudem weist nach dieser Ausführungsform der Erfindung der Ringkörpers 10 über Filmscharniere verbundene Stege auf, wobei die in Aufsteckrichtung ersteren Stege die Anlauffläche 7 bilden. Des Weiteren greifen die Stege über weitere Filmscharniere an in die Nut 9 eingesetzten Ringelementen an.

Nach einer besonders einfachen und vorteilhaften Ausführungsform der Erfindung besteht der Ringkörper 10 aus einem geschlossenen gummielastischen Material, dessen in Aufsteckrichtung vordere Kontaktfläche die Anlauffläche 7 bildet (Fig. 6 bis 8).

Wird versucht, ein nicht oder nur unzureichend angefastes Anschlussende eines Rohres 1 auf den Anschlussnippel 2 aufzuschieben (Fig. 3 und 6), so bildet die Anlauffläche 7 aufgrund ihrer entsprechend gewählten Dimensionen mit der dem Anschlussende des Rohres zugekehrten Stirnfläche eine Anschlagfläche, die das Aufschieben des Rohres 1 auf den Anschlussnippel hemmt. Dies insbesondere deshalb, da sich der Ringkörper 10 beim Aufschieben eines nicht ordnungsgemäß angefasten Rohres 1 in axialer Richtung elastisch verformt (Fig. 4 und 7), also staucht, was ein Ausbauchen des Ringkörpers unmittelbar ab der Anlauffläche 7 zur Folge hat und somit ein weiteres aufschieben des unangefasten Rohres verhindert.

Bei einem ordnungsgemäß angefasten Rohr stellt jedoch die Anfasung 3 eine Gegenfläche zur Anlauffläche 7 dar, die beim Aufschieben des Rohres 1 auf den Anschlussnippel 2 radial auf den Innendurchmesser des Rohres 1 zusammengedrückt wird und den Weg für das Aufschieben des Rohres 1 in die Anschlussstellung freigibt (Fig. 5 und 8).

## Patentansprüche

1. Vorrichtung zum Anschluss eines Rohres (1) an einem Anschlussnippel (2), aufweisend einen Anschlussnippel (2), wenigstens einen Dichtungsring (5), eine Hülse (6) und einen Ringkörper (10),
wobei das mit einer stirnseitigen Anfasung (3) wenigstens im Bereich des Innendurchmessers versehene Anschlussende (4) des Rohrs (1) unter Zwischenlage des wenigstens einen vorzugsweise im profilierten Anschlussnippel (2) gehaltenen Dichtungsringes (5) zwischen dem Anschlussnippel (2) und der Hülse (6) axial festhaltbar ist, wobei der Anschlussnippel (2) wenigstens eine radial auswärts vorstehende, mittels der stirnseitigen Anfasung (3) im Bereich des Innendurchmessers des Anschlussendes (4) radial nach innen verlagerbare Anlauffläche (7) aufweist, die in Einsteckrichtung gesehen vor dem Dichtungsring (5) angeordnet ist, **dadurch gekennzeichnet, dass** die Anlauffläche (7) mit der Anschlussnippelachse (8) einen spitzen Winkel (α) einschließt und Teil des in eine Nut (9) eingesetzten Ringkörpers (10) ist, der in seiner radial auswärtsragenden Ausgangsstellung einen Abstand zur Anschlussnippelachse (8) aufweist der größer ist als der Innenradius des Rohres (1), und der sowohl in radialer wie auch in axialer Richtung elastisch verformbar ist.

2. Vorrichtung zum Anschluss eines Rohres (1) an einem Anschlussnippel (2), aufweisend einen Anschlussnippel (2), wenigstens einen Dichtungsring (5), eine Hülse (6) und einen Ringkörper (10),
wobei das mit einer stirnseitigen Anfasung (3) wenigstens im Bereich des Außendurchmessers versehene Anschlussende (4) des Rohrs (1) unter Zwischenlage des wenigstens einen Dichtungsringes (5) zwischen dem Anschlussnippel (2) und der Hülse (6) axial festhaltbar ist, wobei die Hülse (6) wenigstens eine radial einwärts vorstehende, mittels der stirnseitigen Anfasung (3) im Bereich des Außendurchmessers des Anschlussendes (4) radial nach außen verlagerbare Anlauffläche (7) aufweist, die in Einsteckrichtung gesehen vor dem Dichtungsring (5) angeordnet ist, **dadurch gekennzeichnet, dass** die Anlauffläche (7) mit der Anschlussnippelachse (8) einen spitzen Winkel (α) einschließt und Teil des in eine Nut (9) eingesetzten Ringkörpers (10) ist, der in seiner radial einwärtsragenden Ausgangsstellung einen Abstand zur Anschlussnippelachse (8) aufweist der kleiner ist als der Außenradius des Rohres (1), und der sowohl in radialer wie auch in axialer Richtung elastisch verformbar ist.

3. Vorrichtung nach Anspruch 1 oder 2, **dadurch gekennzeichnet, dass** der Ringkörpers (10) in Umfangsrichtung gegebenenfalls abschnittsweise, einen polygonen, insbesondere dreieckförmigen oder trapezförmigen, Ringkörperquerschnitt aufspannt.

4. Vorrichtung nach einem der Ansprüche 1 bis 3, **dadurch gekennzeichnet, dass** der Ringkörper (10) über Filmscharniere verbundene Stege aufweist, wobei die in Aufsteckrichtung ersteren Stege die Anlauffläche (7) bilden.

5. Vorrichtung nach Anspruch 4, **dadurch gekennzeichnet, dass** die Stege über weitere Filmscharniere an in die Nut (9) eingesetzten Ringelementen angreifen.

6. Vorrichtung nach einem der Ansprüche 1 bis 3, **dadurch gekennzeichnet, dass** der Ringkörper (10) aus einem um den Ringumfang geschlossenen gummielastischen Material besteht dessen in Aufsteckrichtung vordere Kontaktfläche die Anlauffläche (7) bildet.

## Claims

1. Device for attaching a tube (1) to an attachment nipple (2), comprising an attachment nipple (2), at least one sealing ring (5), a sleeve (6) and an annular body (10),
wherein the attachment end (4) of the tube (1) provided with an end-face chamfer (3) at least in the region of the internal diameter can be axially retained between the attachment nipple (2) and the sleeve (6), with interpositioning of the at least one sealing ring (5), which is preferably held in the profiled attachment nipple (2), wherein the attachment nipple (2) has at least one radially outwardly protruding run-up surface (7) which can be displaced radially inwards by means of the end-face chamfer (3) in the region of the internal diameter of the attachment end (4) and which is disposed in front of the sealing ring (5) as seen in the insertion direction, **characterised in that** the run-up surface (7) forms an acute angle (α) with the attachment nipple axis (8) and is part of the annular body (10) inserted into a groove (9), which annular body, in its radially outwardly protruding starting position, is at a distance from the attachment nipple axis (8) which is greater than the internal radius of the tube (1), and which is elastically deformable both in the radial and also in the axial direction.

2. Device for attachment of a tube (1) to an attachment nipple (2), comprising an attachment nipple (2), at least one sealing ring (5), a sleeve (6) and an annular body (10),
wherein the attachment end (4) of the tube (1) provided with an end-face chamfer (3) at least in the region of the external diameter can be axially retained between the attachment nipple (2) and the sleeve (6), with interpositioning of the at least one sealing ring (5), wherein the sleeve (6) has at least one radially inwardly protruding run-up surface (7) which can be displaced radially outwards by means of the end-face chamfer (3) in the region of the external diameter of the attachment end (4) and which is disposed in front of the sealing ring (5) as seen in the insertion direction, **characterised in that** the run-up surface (7) forms an acute angle (α) with the attachment nipple axis (8) and is part of the annular body (10) inserted into a groove (9), which annular body, in its radially inwardly protruding starting position, is at a distance from the attachment nipple axis (8) which is smaller than the external radius of the tube (1), and which is elastically deformable both in the radial and also in the axial direction.

3. Device as claimed in claim 1 or 2, **characterised in that**, in the peripheral direction, and possibly in portions, the annular body (10) spans a polygonal, in particular triangular or trapezoidal, annular body cross-section.

4. Device as claimed in any one of claims 1 to 3, **characterised in that** the annular body (10) has webs connected by film hinges, wherein the first webs in the plug-on direction form the run-up surface (7).

5. Device as claimed in claim 4, **characterised in that**, by means of further film hinges, the webs engage on annular elements inserted into the groove (9).

6. Device as claimed in any one of claims 1 to 3, **characterised in that** the annular body (10) consists of a rubber elastic material closed around the annular periphery, the front contact surface of which in the plug-on direction forms the run-up surface (7).

## Revendications

1. Dispositif de raccordement d'un tuyau (1) sur un raccord fileté (2), présentant un raccord fileté (2), au moins une bague d'étanchéité (5), une douille (6) et un corps annulaire (10), l'extrémité du raccord (4) du tuyau (1), prévue avec un chanfrein (3) côté face au moins dans la zone du diamètre intérieur, pouvant être fixée axialement en interposant la bague d'étanchéité (5), maintenue de préférence dans le raccord fileté (2) profilé, entre le raccord fileté (2) et la douille (6), le raccord fileté (2) présentant au moins une surface de butée (7) déplaçable radialement vers l'intérieur, dans la zone du diamètre intérieur de l'extrémité du raccord (4), à l'aide du chanfrein (3) côté face, faisant saillie radialement vers l'extérieur, qui est située devant la bague d'étanchéité (5) vu dans le sens d'insertion, **caractérisé en ce que** la surface de butée (7) forme avec l'axe du raccord fileté (8) un angle aigu (α) et est une partie d'un corps annulaire (10) inséré dans une rainure (9) qui présente, dans sa position initiale faisant saillie radialement vers l'extérieur, un espace pour l'axe du raccord fileté (8) qui est plus grand que le rayon intérieur du tuyau (1), et qui est élastiquement déformable aussi bien dans le sens radial que dans le sens axial.

2. Dispositif de raccordement d'un tuyau (1) sur un raccord fileté (2), présentant un raccord fileté (2), au moins une bague d'étanchéité (5), une douille (6) et un corps annulaire (10), l'extrémité du raccord (4) du tuyau (1), prévue avec un chanfrein (3) côté face au moins dans la zone du diamètre extérieur, pouvant être fixée axialement en interposant au moins une bague d'étanchéité (5), entre le raccord fileté (2) et la douille (6), la douille (6) présentant au moins une surface de butée (7) déplaçable radialement vers l'extérieur, dans la zone du diamètre extérieur de l'extrémité du raccord (4), à l'aide du chanfrein (3) côté face, faisant saillie radialement vers l'intérieur, qui est disposée devant la bague d'étanchéité (5) vu dans le sens d'insertion, **caractérisé en ce que** la surface de butée (7) forme avec l'axe du raccord fileté (8) un angle aigu (α) et est une partie d'un corps annulaire (10) inséré dans une rainure (9) qui présente, dans sa position de sortie faisant saillie radialement vers l'intérieur, un espace pour l'axe du raccord fileté (8) qui est plus petit que le rayon extérieur du tuyau (1), et qui est élastiquement déformable aussi bien dans le sens radial que dans le sens axial.

3. Dispositif selon la revendication 1 ou 2, **caractérisé en ce que** le corps annulaire (10) tend dans le sens circonférentiel, le cas échéant par sections, une section transversale du corps annulaire polygonale, en particulier de forme trapézoïdale ou triangulaire.

4. Dispositif selon l'une des revendications 1 à 3, **caractérisé en ce que** le corps annulaire (10) présente des barres reliées par le biais de charnières à film, les premières barres dans le sens d'insertion formant la surface de butée (7).

5. Dispositif selon la revendication 4, **caractérisé en ce que** les barres viennent en prise par le biais d'autres charnières à film au niveau d'éléments annulaires placés dans la rainure (9).

6. Dispositif selon l'une des revendications 1 à 3, **caractérisé en ce que** le corps annulaire (10) dont la surface de butée (7) forme la face de contact avant dans le sens d'insertion est en un matériau caoutchouc élastique, fermé autour de la circonférence annulaire.
